# EUROPEAN PATENT APPLICATION

(11) **EP 2 481 837 A2**
(43) Date of publication of application: **01.08.2012**
(21) Application number: 11173367.1
(22) Date of filing: 08.07.2011
(51) Int. Cl.: C25B 1/26, C25B 15/08

(54) **Process for producing chlorine with low bromine content**

(30) Priority: 26.01.2011 US 436313 P
(71) Applicant: Superior Plus LP, Calgary AB T2P 3G2 (CA)
(72) Inventor: Omelchenko, Yuri Alexeevich, Toronto, Ontario M4C 5E8 (CA); Lipsztajn, Marek, Etobicoke, Ontario M9A 4A7 (CA); Dluzniewski, Tomasz Jerzy, Mississauga, Ontario L5N 7N5 (CA)
(74) Representative: Ackroyd, Robert

(57) **Abstract**

Chlorine with a low bromine content is produced by electrolyzing brine to produce gaseous chlorine, alkali metal hydroxide and hydrogen, separating the gaseous chlorine from the electrolyte (anolyte in the case of the membrane process), directing electrolyte to a primary dechlorination step using hydrochloric acid to remove gaseous chlorine therefrom, optionally directing depleted electrolyte (anolyte in the case of the membrane process) from the primary dechlorination step to a secondary dechlorination step using a reducing agent for chlorine and oxychlorine species, and recycling dechlorinated depleted electrolyte (anolyte in the case of the membrane process) to salt dissolvers to prepare brine for electrolysis. At least part of the gaseous chlorine generated in the primary dechlorination step is not combined with gaseous chlorine generated in the electrolysis step.

## Description

### FIELD OF INVENTION

The present invention relates to methods of producing a chlorine gas, an aqueous alkali metal hypochlorite solution and liquid chlorine. More specifically, the present invention relates to a method of producing a chlorine gas and liquid chlorine having a lower bromine content than that obtained in the conventional chlor-alkali processes (particularly membrane and mercury based processes).

### BACKGROUND TO THE INVENTION

Conventionally, an electrolysis of an alkali metal chloride solution, typically sodium chloride and potassium chloride solution, denoted also as brine, has been performed for the purpose of producing chlorine, sodium or potassium hydroxide, and hydrogen. Since the raw material in such processes usually contains alkali metal bromides as impurities, chlorine generated therefrom is contaminated with bromine. The bromine impurity in chlorine is less and less tolerated, especially in water treatment applications. This is because, in certain water treatment processes, bromine is at least partially converted to alkali metal bromate which is a known health hazard. Another application which requires chlorine with low bromine content is the production of various chlorinated organic compounds.

There are various approaches in dealing with the bromine contamination of the chlorine product. The first approach is to remove alkali metal bromide from the alkali metal chloride brine. Such an approach is described in numerous prior art documents, for example, US Patents Nos. 460,370, 2,622,966, 3,371,998, 5,069,884, and 6,428,677, British Patents Nos. 382,512, 526,542, 893,692, and 991,610 and Modem Chlor-Alkali Technology, Volume 7, pp. 157 - 159, published in 1997.

Another approach is based on the purification of chlorine product, typically by distillation (see, for example, WO 2004/018355) or another process (see European Patent No. 979,671 or US Patent Application No. 2008/0224094).

Yet another approach, described in the US Patent No. 3,660,261 and WO 2005/068686, involves an oxidation of various bromine species present in brine to alkali metal bromate, which is claimed to result in the production of chlorine with low bromine content.

All the above-described processes are very costly and, in some cases, for example distillation, also energy intensive. There is, therefore, a need to develop a relatively simple and inexpensive process which results in the production of chlorine with low bromine content.

### SUMMARY OF THE INVENTION

The present invention is directed towards the provision of a method of producing chlorine with low bromine content. The present invention relates to a method for producing a chlorine gas, which method includes the steps of
(a) electrolyzing brine to produce gaseous chlorine, alkali metal hydroxide and hydrogen,
(b) separating gaseous chlorine from the electrolyte (anolyte in the case of the membrane process),
(c) directing electrolyte (anolyte in the case of the membrane process) to the primary dechlorination step in which hydrochloric acid is added to the depleted brine,
(d) optionally directing electrolyte (anolyte in the case of the membrane process) from the primary dechlorination step to the secondary dechlorination step, in which a reducing agent is added to the depleted brine,
(e) optionally subjecting depleted brine to further purification steps, for example sulfate removal, and
(f) recycling dechlorinated depleted brine to salt dissolvers,
wherein at least part of gaseous chlorine generated in step (c) is not combined with gaseous chlorine generated in steps (a) and (b).

### BRIEF DESCRIPTION OF DRAWINGS

Figure 1 is a schematic flow sheet of a conventional membrane, chlor-alkali process from the Handbook of Chlor-Alkali Technology, p. 448, published in 2005.

Figure 2 is a schematic flow sheet of a membrane, chlor-alkali process being one embodiment of the present invention;

Figure 3 is a simplified flow diagram ofthe chlorine handling system of one embodiment of the present invention. In the Figure, chlorine streams are represented by thick lines while brine solution streams are denoted by thin lines; and

Figure 4 illustrates the time dependence of the bromine content in gaseous chlorine product in one embodiment of the present invention.

### GENERAL DESCRIPTION OF THE INVENTION

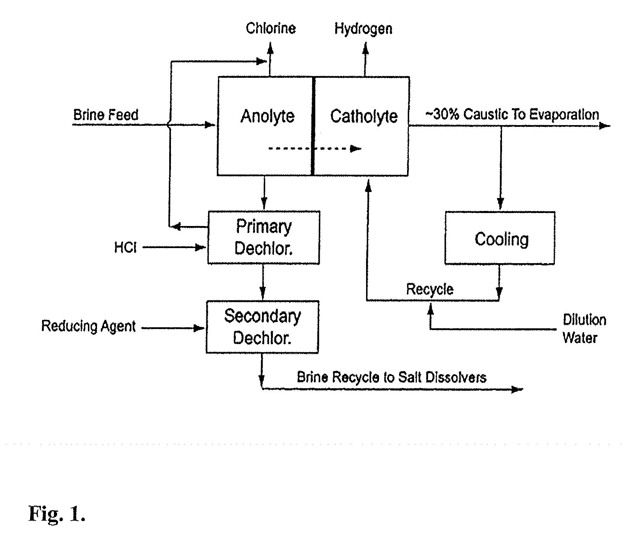

The process of the invention comprising the steps described above differs from the all known, conventional prior art processes in that chlorine produced in the electrolyzers is handled separately from the chlorine generated in the treatment of the depleted brine, for example, in the primary dechlorination step (typically performed under vacuum). The flow diagram of a conventional membrane process is shown, for example, in the Handbook of Chlor-Alkali Technology, chapter 6, p. 448 (Figure 6.5), published in 2005 (now reproduced as Figure 1). For a conventional mercury based process, see Figure 6.4 on page 447 in the same Handbook.

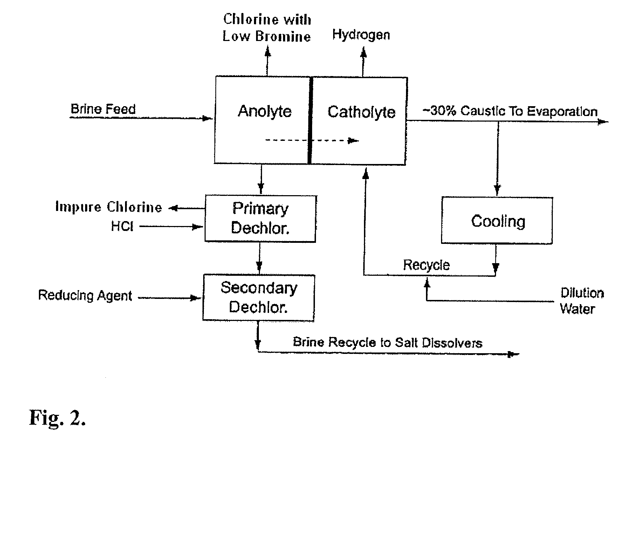

It is believed that, by not combining both sources of chlorine (wherein chlorine removed in steps (a) and (b) is the main source of chlorine in the overall process), the main fraction (or at least a large fraction) of bromine will be contained in the chlorine removed from the depleted brine in step (c). Thus one can obtain a majority of chlorine with a low bromine content, and a small fraction of chlorine containing a relatively high concentration of bromine. The latter, contaminated chlorine can be directed to any suitable purification step, for example, distillation, or may be utilized in the production of compounds which do not require high-purity chlorine as a substrate, for example in the generation of hydrochloric acid or an impure alkali metal hypochlorite. It is also possible to direct contaminated chlorine to disposal. If the latter option is chosen, it is possible to perform the destruction of all residual chlorine and oxychlorine species (such as, for example, chlorate and hypochlorite ions/hypochlorous acid) in the second dechlorination step (i.e. upon addition of the reducing agent and, optionally, hydrochloric acid) and possibly avoid the first dechlorination step altogether. A flow diagram of an embodiment of the process of the present invention is schematically presented in Figure 2.

Without being bound by any particular theory, it is believed that the main sources of elemental bromine are chemical reactions taking place in the depleted brine treatment loop rather than the electrochemical cells.. It is further believed that the content of bromine in the main chlorine product can be further minimized by adjusting the pH of the electrolyte (anolyte in the case of the membrane process). While the general operating pH range in the electrolyzers is typically about 3.1 to about 5.5, it is preferred to adjust the pH upward to the range about 3.5 to about 5.5, most preferably about 3.9 to about 5.5. Such pH adjustment can be conveniently achieved by, for example, the addition of hydroxide and/or carbonate to the feed brine stream. The pH of the feed brine streams utilized in the present invention is typically in the range of 8 to 11.

It is beneficial to maintain the temperature of the electrolyte (anolyte in the case ofthe membrane process) in the range of about 80° to about 90°C.

The novel method of the present invention can be utilized in most conventional chlor-alkali processes (in particular membrane and mercury based processes). A relatively small and inexpensive modification to the existing chlor-alkali plants results in achieving a goal of producing chlorine with low bromine content. If desired, it is possible to combine the process of the present invention with other processes involving removal of alkali metal bromide from brine such as those described, for example, in Modem Chlor-Alkali Technology, Volume 7, pp. 157 - 159, published in 1997, cited earlier in this patent application.

### EXAMPLE

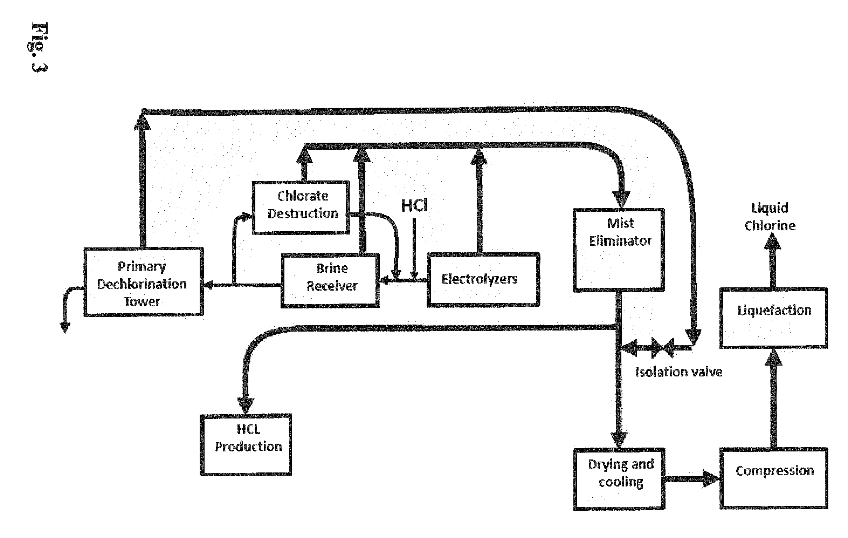

The testing of the concept of the present invention was carried out in the membrane-based, chlor-alkali plant located in Port Edwards, Wisconsin. This plant operates two product lines, one producing chlorine, sodium hydroxide and hydrogen and the second one producing chlorine, potassium hydroxide and hydrogen. A simplified flow diagram of the chlorine handling system in this plant is presented in Figure 3. Both sodium and potassium hydroxide product lines share certain steps associated with the handling of chlorine, namely: drying and cooling, compression and liquefaction. Other steps which involve handling of two different electrolytes (sodium chloride and potassium chloride), such as for example the operation of the primary dechlorination towers, are separate for both product lines. It is noted that for the purpose of simplicity some steps, such as for example secondary dechlorination step, were omitted in Figure 3. Under normal operating conditions (i.e., in the conventional operation) the product chlorine originating from the primary dechlorination towers of both product lines is combined with the chlorine removed from the electrolyzers (isolation valve shown in Figure 3 is open).

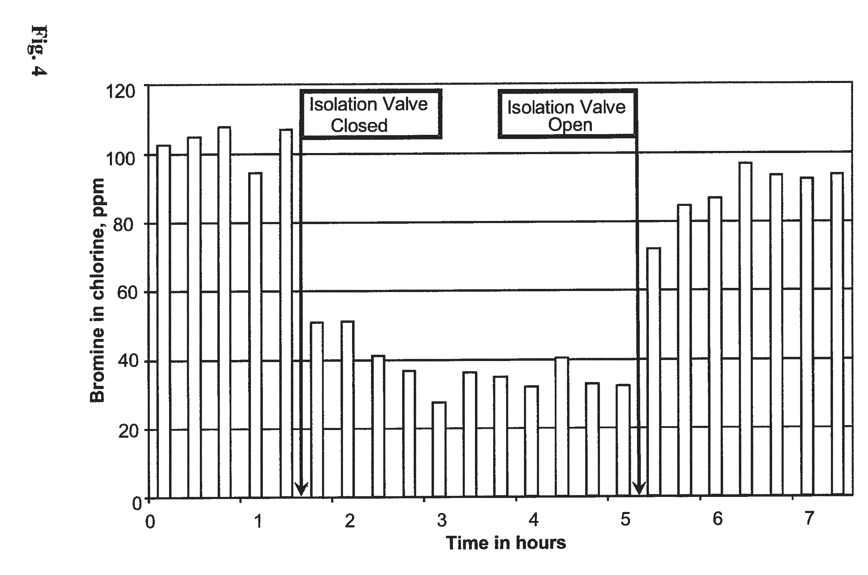

During testing of the concept of the present invention the content of bromine was frequently monitored in the final chlorine product after the compression step. The time dependence ofthe bromine content in gaseous chlorine product during testing is graphically presented in Figure 4. During the conventional operation (an isolation valve open) the content of bromine in gaseous chlorine product was close to 100 ppm (parts per million). Upon closing of this valve, i.e., by separating the chlorine originating from the primary dechlorination tower from that originating from the electrolyzers, the bromine content dropped to an average of 38 ppm. At the same time, the bromine content determined in the impure chlorine separated from the primary dechlorination towers was found to be 5020 ppm and 2880 ppm for the sodium and potassium lines, respectively. The pH values of the anolytes, measured in the sodium and potassium lines electrolyzers were 4.5 and 3.6, respectively. When the isolation valve was closed, the chlorine product containing relatively large bromine contamination was directed to disposal. It is understood, however, that with minor modification to the overall system, this impure chlorine product can be purified or utilized as is, for example, in the hydrochloric acid production or alkali metal hypochlorite generation.

The experiments presented above clearly show that by separating the chlorine product originating in the primary dechlorination tower from that originating in the electrolyzers a very significant improvement in the chlorine product purity can be achieved (over 60%). These experiments also show that the anolyte pH has a significant effect on the contribution of bromine impurity (the higher the pH, the higher the content of bromine in chlorine originating in the primary dechlorination tower, thus the lower the contamination of the final chlorine product upon separation of both sources of chlorine). The positive effect of a higher anolyte pH on the purity of chlorine was further confirmed by adjusting the pH in the potassium line electrolyzers upward from 3.6 to 3.8 and measuring the bromine content in the chlorine product originating in the electrolyzers - a decrease of bromine content of nearly 30% was observed.

A further improvement in the separation of the impure chlorine from the pure chlorine can be achieved by additional changes to the chlorine handling system of the embodiment shown in Figure 3. For example, it is possible to separate the main source of chlorine (originating from the electrolyzers) from that originating not only in the primary dechlorination tower (as shown above in Figure 3) but also in certain other steps involving depleted brine handling system, such as for example brine receiver or chlorate destruction, the latter step involving a hydrochloric acid and heat addition. It is expected that the purest product can be achieved when chlorine originating in the electrolyzers is handled separately from all other sources of chlorine. It is noted that the primary dechlorination step shown in Figures 1 and 2 encompasses not only the primary dechlorination tower but also the brine receiver and chlorate destruction step.

### SUMMARY OF THE DISCLOSURE

In summary of this disclosure, the present invention provides a procedure for producing gaseous chlorine having a low bromine content. Modifications are possible within the scope of the invention.

## Claims

1. A method ofproducing chlorine with low bromine content, which comprises:
(a) electrolyzing brine to produce gaseous chlorine, alkali metal hydroxide and hydrogen,
(b) separating gaseous chlorine from the electrolyte (anolyte in the case of the membrane process),
(c) directing depleted electrolyte (anolyte in the case of the membrane process) to a primary dechlorination step using hydrochloric acid to remove gaseous chlorine therefrom,
(d) optionally directing the depleted electrolyte (anolyte in the case ofthe membrane process) from the primary dechlorination step to a secondary dechlorination step using a reducing agent for chlorine and oxychlorine species,
(e) recycling dechlorinated depleted electrolyte (anolyte in the case of the membrane process) to salt dissolvers to prepare brine for electrolysis,
wherein at least part of the gaseous chlorine generated in step (c) is not combined with gaseous chlorine generated in steps (a) and (b).

2. A method as claimed in claim 1, wherein none of the gaseous chlorine generated in step (c) is combined with gaseous chlorine generated in steps (a) and (b).

3. A method as claimed in claim 1 or 2, wherein the chlorine generated in step (c) is utilized to generate hydrochloric acid.

4. A method as claimed in claim 1or 2, wherein the chlorine generated in step (c) is utilized to generate alkali metal hypochlorite.

5. A method as claimed in any of claims 1to 4, wherein the electrolysis step (a) is carried out at a pH of about 3.1 to about 5.5.

6. A method as claimed in claim 5, wherein the pH is about 3.5 to about 5.5.

7. A method as claimed in claim 5, wherein the pH is about 3.9 to about 5.5.

8. A method as claimed in any of claims 1 to 7, wherein step (a) is effected at a temperature of about 80° to about 90°C.

9. A method as claimed in any of claims 1 to 8, wherein depleted brine is subjected to a further purification step.

10. A method as claimed in any of claims 1 to 9, wherein gaseous chlorine formed in processing of depleted brine is not mixed with the gaseous chlorine formed in steps (a) and (b).
